**Europäisches Patentamt**

**European Patent Office**

**Office européen des brevets**

(19)

(11) Veröffentlichungsnummer : **0 135 830
B1**

(12) **EUROPÄISCHE PATENTSCHRIFT**

(45) Veröffentlichungstag der Patentschrift :
20.01.88

(51) Int. Cl.⁴ : **H 02 M   5/45**

(21) Anmeldenummer : **84110220.5**

(22) Anmeldetag : **28.08.84**

(54) **Parallelschwingkreisumrichter.**

(30) Priorität : **02.09.83 DE 3331690**

(43) Veröffentlichungstag der Anmeldung :
**03.04.85 Patentblatt 85/14**

(45) Bekanntmachung des Hinweises auf die Patenterteilung : **20.01.88 Patentblatt 88/03**

(84) Benannte Vertragsstaaten :
**AT BE CH DE FR GB IT LI LU NL SE**

(56) Entgegenhaltungen :
**DD-A-   126 895
DD-A-   206 865
DE-A- 3 023 697**

(73) Patentinhaber : **AEG - Elotherm GmbH
Hammesberger Strasse 31
D-5630 Remscheid-Hasten (DE)**

(72) Erfinder : **Matthes, Hans Georg, Dipl.-Ing.
Lukasstrasse 7
D-5632 Wermelskirchen (DE)**
Erfinder : **Wittenbecher, Hasso, Dipl.-Ing.
Brückenstrasse 16
D-5630 Remscheid (DE)**

(74) Vertreter : **Patentanwaltsbüro Cohausz & Florack
Schumannstrasse 97
D-4000 Düsseldorf 1 (DE)**

**Beschreibung**

Die Erfindung bezieht sich auf einen Parallelschwingkreisumrichter mit mindestens einer Zwischenkreisinduktivität, die über zwei in Reihe hintereinanderliegende Thyristoren des Wechselrichters vorflutbar ist, und einer den Parallelschwingkreis bildenden Last, an der eine Startschaltung für die Kommutierung des bei der Vorflutung fließenden Stromes auf die unter Einschluß der Last in Diagonalzweigen in Reihe liegenden Thyristoren angeschlossen ist.

Bei einem bekannten Parallelschwingkreisumrichter besteht die Startschaltung aus einem Hilfs-Oszillator, der den Lastschwingkreis solange anstößt, bis daß der Lastkondensator eine zur Kommutierung des vorgewählten Anfahr-Gleichstromes geeignete Spannung aufweist. Der Start mittels einer solchen Startvorrichtung kann relativ lange dauern und ist deshalb für kleine Betriebszeiten nicht immer geeignet.

Ferner ist es bekannt, an den Parallelschwingkreis der Last einen Reihenschwingkreis anzuschließen. Damit der Start mit einer derartigen Startschaltung gelingt, ist es erforderlich, ein Optimum an Energie aus dem Reihenschwingkreis auf den Lastschwingkreis zu übertragen. Dies gelingt nur bei entsprechend gewählter Eigenfrequenz und Dämpfung. Da die Eigenfrequenz des Lastschwingkreises aber mit der Last schwankt, läßt sich mit ein und derselben Startschaltung ein Starten nicht in jedem Fall gewährleisten.

Der Erfindung liegt die Aufgabe zugrunde, einen Parallelschwingkreisumrichter zu schaffen, der sich auch bei wechselnder Last und damit wechselnder Eigenfrequenz und Dämpfung schnell starten läßt.

Diese Aufgabe wird erfindungsgemäß dadurch gelöst, daß die Startschaltung einen fremdgeladenen, über einen Schalter auf den Parallelschwingkreis der Last entladbaren Kondensator umfaßt, daß ein weiterer, fremdgeladener Kondensator mittels eines weiteren Schalters über einen der im Vorflutkreis der Zwischenkreisinduktivität liegenden Thyristoren mit zur Stromrichtung des Stromes bei der Vorflutung entgegengesetzter Stromrichtung entladbar ist, und daß eine Steuereinrichtung in Abhängigkeit der beim Entladen des ersten Kondensators an der Last entstehenden Spannung frühestens beim Spannungsmaximum mittels des weiteren Schalters die Entladung des weiteren Kondensators einleitet.

Bei dem erfindungsgemäßen Parallelschwingkreisumrichter erfolgt die Kommutierung individuell in Abhängigkeit von den Eigenschaften des Lastschwingkreises, indem die sich am Parallelschwingkreis der Last bei Entladung bildende, von der Eigenfrequenz des Lastkreises abhängige Spannung bezüglich des Maximums überwacht wird und in Abhängigkeit von dieser Spannung durch Zwangslöschung eines Thyristors die Kommutierung des Stromes auf die diagonalliegenden Thyristoren eingeleitet wird.

Um das Spannungsmaximum sicher zu erfassen, kann nach einer Ausgestaltung der Erfindung die Spannung an der Last über ein Differenzierglied erfaßt werden. Der Null-Durchgang ist im Gegensatz zum Spannungsmaximum schärfer ausgeprägt.

Als vorteilhaft hat sich erwiesen, wenn der weitere Schalter nicht beim Spannungsmaximum, sondern etwas verzögert geschlossen wird. Dies hat zwar zur Folge, daß zu Beginn die Kommutierungsspannung etwas geringer als möglich ist, doch ergibt sich wegen der damit verbundenen Verminderung der Frequenz für die Kommutierung ein höherer Lastwiderstand, was wiederum eine höhere und damit günstigere Spannung für die Kommutierung zur Folge hat.

Im folgenden wird die Erfindung anhand einer Zeichnung näher erläutert. Im einzelnen zeigen
Fig. 1 ein Schaltbild und
Fig. 2 ein Diagramm der verschiedenen Spannungen und Steuerimpulse.

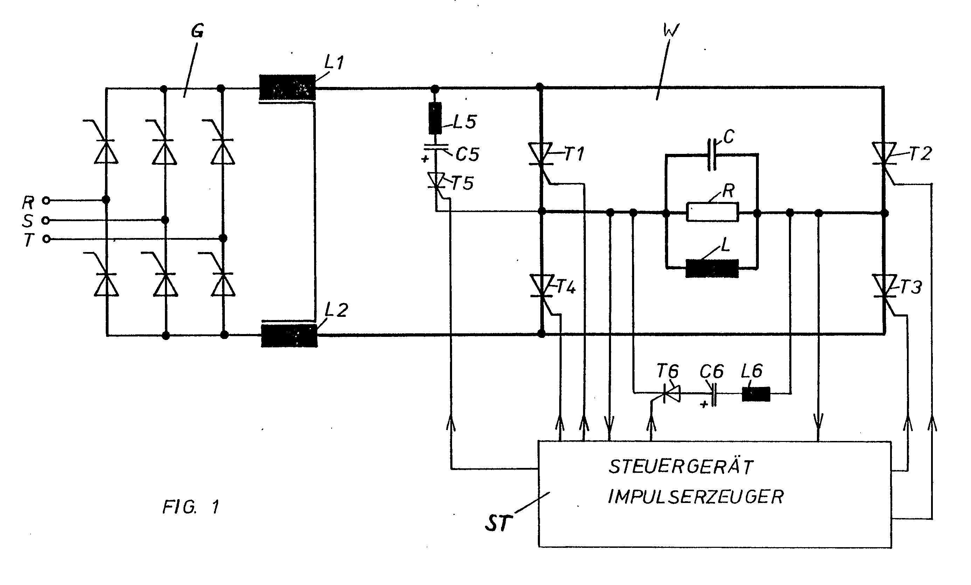

Der in Fig. 1 dargestellte Parallelschwingkreisumrichter besteht aus einem am Netz angeschlossenen Brückengleichrichter G, zwei Zwischenkreis-Induktivitäten $L_1$, $L_2$ und einem Brückenwechselrichter W. Im Brückenzweig des Wechselsrichters W liegt die Last als Parallelschwingkreis, bestehend aus Induktivität L, Kondensator C und Widerstand R. Jeder Diagonalzweig weist einen Thyristor $T_1$ bis $T_4$ auf. Die Thyristoren $T_1$ bis $T_4$ erhalten von einem in einem Steuergerät St enthaltenen Impulserzeuger entsprechend der gewünschten Wechselrichterfrequenz Impulse.

Parallel zum Thyristor $T_1$ liegt ein Kondensator $C_5$ in Reihe mit einer Drossel $L_5$ und einem Thyristor $T_5$. Der Last LRC liegt ein Thyristor $T_6$ mit einer Induktivität $L_6$ und einem Kondensator $C_6$ parallel. Die Kondensatoren $C_5$, $C_6$ werden durch eine nicht dargestellte Stromquelle fremdgeladen.

Die Steuereinrichtung St überwacht die Spannung am Lastkreis LRC und liefert ein Startsignal an den Thyristor $T_5$.

Der erfindungsgemäße Parallelschwingkreisumrichter arbeitet auf folgende Art und Weise:

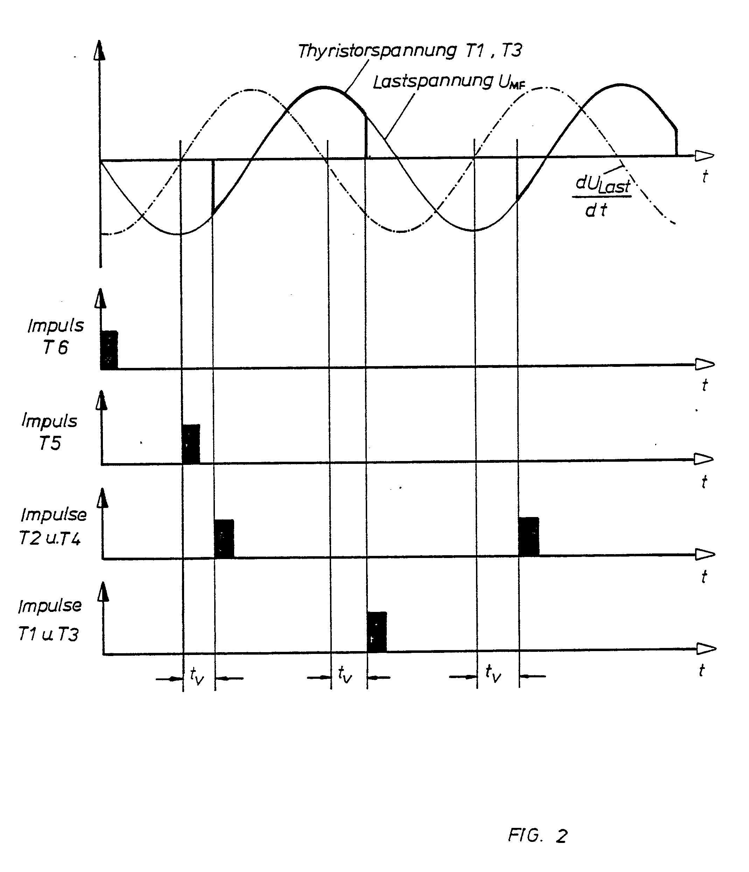

Vor dem Start des Wechselrichters W sind die Thyristoren $T_1$, $T_4$ geöffnet und führen den für die Vorflutung der Induktivität $L_1$, $L_2$ erforderlichen Strom. Die Kondensatoren $C_5$, $C_6$ sind entsprechend der im Schaltbild dargestellten Weise geladen. Zum Zeitpunkt t = 0 wird ein Zündimpuls an den Thyristor $T_6$ gegeben, wodurch die Entladung des Kondensators $C_6$ über den Lastkreis LRC eingeleitet wird. Am Lastkreis bildet sich dann die in Fig. 2 dargestellte Spannung $U_{MF}$ aus. Diese Spannung wird von der Steuereinrichtung St erfaßt und zum Zwecke des leichteren Auffindens des Spannungsmaximums differenziert. Der Null-Durchgang der differenzierten Spannung $U_{MF}$ bestimmt den Steuerimpuls für den Thyristor $T_5$. Der Kondensator $C_5$ wird dann über den Diagonalzweig mit dem Thyristor T₁ mit einer Stromflußrichtung entladen, die der Stromflußrichtung des Stromes für die Vorflutung in T₁ entgegengerichtet ist. Dadurch wird der Thyristor T₁ gelöscht. Der Thyristor T₅ führt dann für eine definierte Zeit t$_v$ den Vorflutstrom. Nach der Zeit t$_v$ wird eine Zündung der Thyristoren T₂ und T₄ eingeleitet. Für den Vorflutstrom bildet nun der durch Entladung des Kondensators C₆ geladene Schwingkreiskondensator C auf der dem Thyristor T₂ zugekehrten Seite eine Senke, so daß der Vorflutstrom über T₂, die Last LRC und den Thyristor T₄ fließt. Bei ausreichend großem Vorflutstrom ist dieser in der Lage, den Schwingkreiskondensator C derart zu laden, daß er sich auf eine Spannung auflädt, die ausreicht, den Wechselrichter W jetzt selbständig kommutieren zu lassen.

Wird der Wechselrichter W mit einer anderen Last betrieben, ändert sich an dieser Funktion prinzipiell nichts. Es wird sich lediglich eine andere Spannung U$_{MF}$ an der Last ausbilden. Da aber der Zündimpuls für den Thyristor T₅, der die Kommutierung einleitet, in Abhängigkeit von dem Maximum der Spannung an der Last gegeben wird, ist auch in diesem Fall ein sicherer Start für den Wechselrichter gewährleistet.

### Patentansprüche

1. Parallelschwingkreisumrichter mit mindestens einer Zwischenkreisinduktivität (L₁, L₂), die über zwei in Reihe hintereinanderliegende Thyristoren (T₁, T₄) des Wechselrichters (W) vorflutbar ist, und einer den Parallelschwingkreis bildenden Last (LRC), an der eine Startschaltung für die Kommutierung des bei der Vorflutung fließenden Stromes auf die unter Einschluß der Last in Diagonalzweigen in Reihe liegenden Thyristoren (T₂, T₄) angeschlossen ist, dadurch gekennzeichnet, daß die Startschaltung einen fremdgeladenen, über einen Schalter (T₆) auf den Parallelschwingkreis (LRC) der Last entladbaren Kondensator (C₆) umfaßt, daß ein weiterer fremdgeladener Kondensator (C₅) mittels eines weiteren Schalters (T₅) über einen der im Vorflutkreis der Zwischenkreisinduktivität (L₁, L₂) liegenden Thyristoren (T₁, T₄) mit zur Stromrichtung des Stromes bei der Vorflutung entgegengesetzter Stromrichtung entladbar ist, und daß eine Steuereinrichtung (St) in Abhängigkeit von der beim Entladen des ersten Kondensators (C₆) an der Last (LRC) entstehenden Spannung (U$_{MF}$) frühestens beim Spannungsmaximum mittels des weiteren Schalters (T₅) die Entladung des weiteren Kondensators (C₅) einleitet.

2. Parallelschwingkreisumrichter nach Anspruch 1, dadurch gekennzeichnet, daß die Spannung (U$_{MF}$) an der Last (LRC) über ein Differenzierglied erfaßt wird.

3. Parallelschwingkreisumrichter nach Anspruch 1 oder 2, dadurch gekennzeichnet, daß die Steuereinrichtung (St) ein Verzögerungsglied aufweist, über das die Zündbefehle an die Thyristoren (T₂, T₄ und T₁, T₃) gelangen.

### Claims

1. A parallel resonance circuit frequency converter having at least one intermediate circuit inductance (L₁, L₂) drainable via two thyristors (T₁, T₄) of the inverter (W) arranged in series with each other, and a load resistance (LRC) forming the parallel resonance circuit to which a starting circuit is connected for commutating the current on drainage through the thyristors (T₂, T₄) which are included in branches in series with the load resistance, characterised in that the starting circuit includes an externally charged capacitance (C₆) dischargeable by means of a switching element (T₆) through the parallel resonance circuit (LRC) of the load resistance, that a further externally charged capacitance (C₅) is dischargeable by means of a further switching element (T₅) by way of one of the thyristors (T₁, T₄) in the drainage circuit of the intermediate circuit inductance (L₁, L₂) with a current direction opposite to the current direction of the current on drainage, and that a control device (St) initiates discharging of the further capacitance (C₅) in dependence on the voltage (U$_{MF}$) arising on discharge of the first capacitance (C₆) through the load resistance (LRC) by means of the further switching element (T₅) no later than at maximum voltage.

2. A parallel resonance circuit frequency converter according to Claim 1, characterised in that the voltage (U$_{MF}$) at the load resistance (LRC) is sensed by a differential element.

3. A parallel resonance circuit frequency converter according to claim 1 or 2, characterised in that the control device (St) has a delay element by way of which ignition signals are supplied to the thyristors (T₂, T₄ and T₁, T₃).

### Revendications

1. Convertisseur à circuit oscillant parallèle avec au moins une inductance intermédiaire (L₁, L₂) qui peut être déchargée par deux thyristors (T₁, T₄) de l'onduleur (W) disposés en série l'un après l'autre, et une charge (LRC) formant le circuit oscillant parallèle (W), à laquelle est reliée une charge d'amorçage pour la commutation du courant s'écoulant lors de la décharge sur les thyristors (T₂, T₄) disposés en série dans des branches diagonales comprenant la charge, caractérisé par le fait que le circuit d'amorçage comprend un condensateur (C₆) chargé indépendamment pouvant être déchargé à travers un commutateur (T₆) sur le circuit oscillant parallèle (LRC) de la charge, qu'un autre condensateur (C₅) chargé indépendamment peut être déchargé au moyen d'un autre commutateur (T₅) à travers un des thyristors (T₁, T₄) se trouvant dans le circuit de décharge de l'inductance du circuit intermédiaire (L₁, L₂) avec un sens d'écoulement du courant inverse du sens d'écoulement du courant lors de la décharge, et qu'un dispositif de commande (S$_t$) produit la décharge de l'autre condensateur (C₅) au moyen de l'autre com-

mutateur ($T_5$) en fonction de la tension ($U_{MF}$) existant à la charge (LRC) lors de la décharge du premier condensateur ($C_6$) au plus tôt pour un maximum de tension.

2. Convertisseur à circuit oscillant parallèle selon la revendication 1, caractérisé par le fait que la tension ($U_{MF}$) à la charge (LRC) est détectée par un organe différenciateur.

3. Convertisseur à circuit oscillant parallèle selon la revendication 1 ou 2, caractérisé par le fait que le dispositif de commande ($S_t$) présente un organe retardateur à travers lequel les ordres de démarrage sont envoyés aux thyristors ($T_2$, $T_4$ et $T_1$, $T_3$).

FIG. 1

STEUERGERÄT
IMPULSERZEUGER

0 135 830

FIG. 2

2